# EUROPEAN PATENT APPLICATION

(11) **EP 1 388 773 A1**
(43) Date of publication of application: **11.02.2004**
(21) Application number: 02380177.2
(22) Date of filing: 07.08.2002
(51) Int. Cl.: G05D 7/06, G05D 16/20

(54) **Pressure regulator for a water impulsion system by means of an electric pump**

(71) Applicant: Bogemar, S.L., 17820 Banyoles (ES)
(72) Inventor: Pagès Pagès, Josep, 25310 Banyoles (ES)
(74) Representative: SUGRANES - VERDONCES - FERREGÜELA

(57) **Abstract**

This regulator (1) comprises water flow detection means (8) linked to a check valve (5) and a reed relay (10), which occupies a fixed position with respect to the body of the regulator (2); and regulation means comprising a pressure transducer (13) that gives an electric signal which is a function of the pressure and is sent to a microprocessor (21) through which the voltage applied to an electric pump motor varies, keeping the pressure in the water circuit constant, the regulation means also comprising an expansion tank (15) provided with a diaphragm (17) connected to a spring (23), tared at a specific pressure in order to absorb the hammering.

## Description

### Technical sector of the invention.-

The present invention refers to a pressure regulator for a water impulsion system by means of an electric pump, of the type which are inserted upstream an electric pump activated by a motor and comprise pressure regulation means and water flow detecting means, made up of a permanent magnet, integral to the movement of a check valve and a reed relay or Hall effect sensor which is static with respect to the regulator, said water flow detecting means being adapted for sending a stop signal to the electric pump whenever the flow is zero or lower than a minimum pre-determined value.

### Background to the invention.-

Multiple embodiments of pressure regulators of the previously described type are known that comprise outward pressure regulation means of the water flow and means for the detection of a nonexistent or minimum water flow. The pressure regulation means comprise a diaphragm, moveable as a function of the regulator's outward pressure and connected to the diaphragm position detector, which acts on the electric pump feed circuit and causes it to stop or start, precisely in accordance with the diaphragm's position or, what is the equivalent, as a function of the pipe pressure upstream the regulator.

The means for the detection of a nonexistent or minimum water flow comprises a position detector connected to the regulator check valve, the purpose of which is to avoid the emptying of the pipes upstream the regulator, which is integral to the opening and closing movements of the check valve. Said position detector also acts on the electric pump feed circuit, causing it to stop or start. Each detector essentially comprises a permanent magnet, connected to the moving part whose position is controlled, and a reed relay or Hall effect sensor, attached to the regulator body.

The working of the electric pump in the conditions set by the position detectors presents the following drawbacks:
a) the electric pump works by a start-stop system, that is, without the possibility of regulating the pressure in the hydraulic system;
b) the action on the electric motor feed circuit by the diaphragm position detector occurs with a high degree of frequency, in view of the relative proximity in the interval given by the maximum and minimum pre-set pressures;
c) the known diaphragm arrangements do not avoid, or do not reduce to a sufficient extent, the hammering caused by the sudden interruption in the water flow supplied by the system.

### Explanation of the invention.-

The pressure regulator for a water impulsion system by means of an electric pump object of the invention is essentially characterised in that the said pressure regulation means comprises a pressure transducer and a microprocessor which processes the signal received by the pressure transducer, varying the feed tension of the electric pump motor as a function of the signal sensed by the pressure transducer, in such a way that the pressure in the water circuit remains essentially constant.

Another feature of the pressure regulator object of the invention consists of the fact that the said regulation means is provided with an expansion tank delimited by a diaphragm, which is biased by a spring that is tared at a predetermined pressure, increasing the volume of the expansion tank when the water pressure in the circuit increases and vice-versa, with the aim of eventually absorbing the hammering.

### Brief description of the drawings.-

A form of embodiment of the pressure regulator for a water impulsion system by means of an electric pump object of the invention is illustrated, by way of nonlimiting example, in the only figure in the drawings, wherein a transversal section view of the regulator is represented with its check valve in the closed position.

### Detailed description of the embodiment example.-

The pressure regulator 1 object of the invention represented in the drawings and which is described as an embodiment example, comprises a regulator body 2 provided with a water inlet 3, the water coming from an electric pump, not represented. Furthermore, the body 2 has a water outlet 4, arranged perpendicularly with respect to the inlet 3 and adapted for receiving a water pipe, not shown, from a distribution network.

Inside said body 2 a check valve 5 is arranged and provided with a rod 6, capable of linear movement in both directions and supported and guided on a guide-support 7; a position detector 8 of the check valve 5, made up of a permanent magnet 9 secured to the rod 6 and, in consequence, integral to the opening and closing movements of the valve 5; a reed relay or Hall effect sensor 10, secured to a cavity 11 made in the body of the regulator 2.

The discussed arrangement of the check valve 5 and the position detector 8 is known, and accordingly a description of its operation is omitted.

Upstream the check valve 5 the body of the regulator 2 has an orifice 12 that establishes hydraulic communication with a cavity 24 that is dimensioned for housing a pressure transducer 13, which emits an electric signal as a function of the hydraulic pressure existing in the chamber 14 of the regulator body 2. The electric signal given by the pressure transducer 13 is applied to a microprocessor 21, arranged in a slot 22 of the body of the regulator 2, varying the feed voltage of the electric pump's electric motor and, resulting from such voltage variation applied to the motor, there is a variation in the turning speed of the pump and a corresponding variation of the hydraulic pressure in the circuit, so in this way the pressure is kept constant, regardless of the water flow supplied to the points of consumption.

The pressure regulator 1 object of the invention has an expansion tank 15 comprising a tank member 16 where a diaphragm 17 made of elastic material is arranged and joined to a piston 18, which is fixed co-axially to the inner end of a rod 19. The rod 19 can slide linearly on its axis in both directions, going through a guide-member 20 fixed to the body of the regulator 2. A spring 23 is arranged co-axially with respect to the rod 19 and works permanently by compression, being tared at a specific pressure and supporting one of its ends against the guide-member 20 and its other end against the piston 18.

With this arrangement of the expansion tank 15, when the hydraulic pressure existing in the chamber 14 of the regulator body 2 and applied on the diaphragm 17 exceeds the action of the spring 23, the piston 18 is moved and the diaphragm 17 is elastically deformed, thus increasing the volume of the chamber 14 and, as a consequence, absorbing the hammering caused by a sudden drop in the system's consumption.

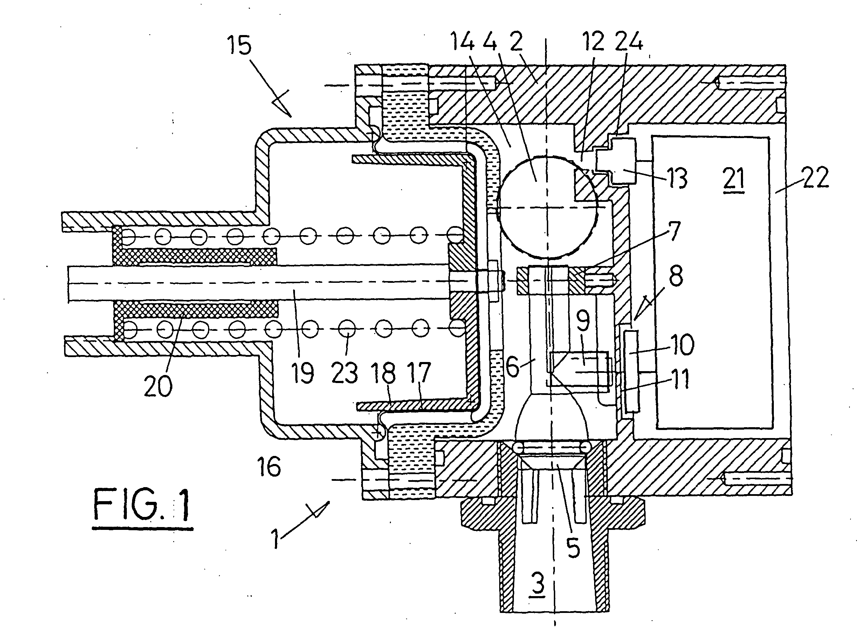

Having described the nature of the present invention in sufficient detail, as well as how to put it into practice, it is stated herein that anything which does not alter, change or modify its basic principle, may be subject to variations in detail. Therefore, the check valve 5 can be subject to the action of a spring which, by elastic reaction, tends to permanently situate the check valve 5 in the closed position shown in Fig. 1, this being the main point and for which a twenty-year patent is herein being applied for, all of which is summarised in the following claims.

## Claims

1. Pressure regulator (1) for a water impulsion system by means of an electric pump, of the type which are inserted upstream an electric pump activated by a motor and comprising pressure regulation means and water flow detecting means, made up of a permanent magnet (9), integral to the movement of a check valve (5) and a reed relay or Hall effect sensor (10) which is static with respect to the regulator (2), said water flow detecting means being adapted for sending a stop signal to the electric pump whenever the flow is zero or lower than a minimum pre-determined value, **characterised in that** said pressure regulation means comprises a pressure transducer (13) and a microprocessor (21) which processes the signal received by the pressure transducer (13) by varying the feed voltage of the electric pump motor as a function of the signal sensed by the pressure transducer (13), in such a way that the pressure in the water circuit remains essentially constant.

2. Pressure regulator (1) according to claim 1, **characterised in that** said regulation means is provided with an expansion tank (15) delimited by a diaphragm (17) which is biased by a spring (23) that is tared at a predetermined pressure, increasing the volume of the expansion tank (15) when the water pressure in the circuit increases and vice-versa, with the aim of eventually absorbing the hammering.
